## Europäisches Patentamt

## European Patent Office

## Office européen des brevets

(19)

(11) Veröffentlichungsnummer: **0 197 026**
**B1**

(12) **EUROPÄISCHE PATENTSCHRIFT**

(45) Veröffentlichungstag der Patentschrift:
**18.07.90**

(51) Int. Cl.⁵: **A01B 71/06**, A01B 59/06

(21) Anmeldenummer: **86890081.2**

(22) Anmeldetag: **26.03.86**

(54) Schnellkupplung zum Anschluss landwirtschaftlicher Arbeitsmaschinen.

(30) Priorität: **26.03.85 AT 896/85**

(43) Veröffentlichungstag der Anmeldung:
**08.10.86 Patentblatt 86/41**

(45) Bekanntmachung des Hinweises auf die Patenterteilung:
**18.07.90 Patentblatt 90/29**

(84) Benannte Vertragsstaaten:
**BE CH DE FR GB IT LI LU NL SE**

(56) Entgegenhaltungen:
WO-A-81/02086
AT-B- 379 048
DE-A- 2 621 162
FR-A- 2 340 675
GB-A- 1 033 249
GB-A- 1 194 040
US-A- 3 285 625

(73) Patentinhaber: **Steiner, Josef, Kollmitzberg 119,
A-3321 Ardagger Markt(AT)**

(72) Erfinder: **Steiner, Josef, Kollmitzberg 119,
A-3321 Ardagger Markt(AT)**

(74) Vertreter: **Gibler, Ferdinand, Dipl.Ing.Dr.tech.,
Dorotheergasse 7/14, A-1010 Wien(AT)**

## Beschreibung

Die Erfindung bezieht sich auf eine Schnellkupplung zum gleichzeitigen Anschluß landwirtschaftlicher Arbeitsmaschinen an die Lenker der Schlepperhydraulik und den Zapfwellenanschluß des Schleppers, bestehend aus einem ständig mit den Lenkern der Schlepperhydraulik verbundenen Kupplungsrahmen und einem bleibend an der Arbeitsmaschine angeordneten Anschlußrahmen, aus einem über eine insbesoders längenverstellbare Gelenkwelle mit dem Zapfwellenanschluß des Schleppers verbundenen Antriebswellenstumpf mit Kupplung, die in einem in Richtung zum Anschlußrahmen hin versetzten horizontalen Steg des Kupplungsrahmens gelagert ist und aus einer Verriegelungsvorrichtung zur gegenseitigen Verriegelung von Kupplungsrahmen und Anschlußrahmen, wobei der mit der Schlepperhydraulik ständig verbundene Kupplungsrahmen annähernd dreieckförmig ausgebildet ist, wobei der an der Arbeitsmaschine angeordnete Anschlußrahmen als annähernd dreieckförmiger Gegenrahmen ausgebildet ist, und die Spitze des dreieckförmigen Kupplungsrahmens und die Spitze des dreieckförmigen Anschlußrahmens nach oben gerichtet sind.

Eine derartige Kupplung wurde z.B. durch die GB-PS 1 033 249 oder die DE-OS 2 031 963 bekannt. Bei dieser Einrichtung sind die dreieckigen Rahmen U-förmig ausgebildet, wobei der Kupplungsrahmen von unten her in den an der Arbeitsmaschine angebrachten Anschlußrahmen eingechoben werden muß. Die beiden Kupplungsteile sind dabei mit dem Rahmen fest verbunden, wodurch sich der Nachteil ergibt, daß ein Verschieben der Kupplungsteile gegenüber dem jeweils zugeordneten Rahmen nicht möglich ist.

Damit ist aber ein Kuppeln allein durch entsprechendes Anfahren mit dem Schlepper an die zu kuppelnde Arbeitsmaschine praktisch nicht möglich, da einerseits der Kupplungsrahmen der Arbeitsmaschine unterfahren und gleichzeitig die beiden Kupplungsteile axial aufeinander ausgerichtet werden müssen. Dabei ist noch zu berücksichtigen, daß der Kupplungsrahmen des Schleppers nahezu vertikal im Rahmen der Arbeitsmaschine hochgefahren werden muß, wodurch sich Schwierigkeiten mit den vorstehenden Teilen der Antriebswellenkupplung ergeben.

Es ist – gemäß EP-OS 63 553 – bereits ein zugmaschinenseitiger Kupplungsrahmen mit einem arbeitsmaschinenseitigen Anschlußrahmen bekannt. Dieser besteht in seinem oberen, dachförmig ausgebildeten Teil aus U-förmigen Profilen, in die der obere Teil des Kupplungsrahmens gesteckt wird. Aus diesem Grund ist für eine Kupplung beider Rahmen vorerst einmal ein Berühren beider Rahmen erforderlich, worauf der Kupplungsrahmen durch Hochheben in die U-Profile des Anschlußrahmens eingeführt werden muß. Zu diesem Zweck muß aber naturgemäß eine genaue Parallelität beider Rahmen vorliegen.

Schließlich ist auch noch – gemäß DE-OS 3 309 588 – ein Schnellkuppler für Ackerschlepper mit einem am Zuggerät befestigten Kupplungsrahmen mit einem nach oben hin geöffneten Schnellkuppelhaken bekannt.

Weiters wurde durch die FR-PS 2 340 675 eine Lösung bekannt, bei der der Kupplungsrahmen mit einem oberen Haken in den Anschlußrahmen einhängbar ist. Weiters ist ein unterer Haken vorgesehen, der ebenfalls mit einem Zapfen des Anschlußrahmens in Verbindung bringbar ist, wobei die beiden Rahmen lediglich flächig aneinander anliegen. Bei dieser Lösung ergibt sich allerdings der Nachteil einer aufwendigen Steuerung, die für den Antrieb der Haken erforderlich ist. Außerdem kann es bei dieser Lösung zu einem gegenseitigen Verschieben der beiden Rahmen aufgrund der einwirkenden Kräfte kommen.

Ziel der Erfindung ist es, diese Nachteile zu vermeiden und eine Kupplung der eingangs erwähnten Art vorzuschlagen, die ein einfaches und sicheres Kuppeln durch Heranfahren des Schleppers an die Arbeitsmaschine ermöglicht.

Erfindungsgemäß wird dies dadurch erreicht, daß der insbesondere kastenförmigen Querschnitt aufweisende Anschlußrahmen nur an zwei von den Spitzen ausgehenden Dreieckseiten in Richtung auf den Schlepper hin vorstehende Vorsprünge und/oder Flanschen aufweist, die im gekuppelten Zustand des Kupplungsrahmens mit dem Anschlußrahmen die Seitenflächen des Kupplungsrahmens übergreifen und daß der Steg zur Lagerung der Antriebswellenklauenkupplung und Steckkupplungen für die Hydraulik-, Pneumatik- und Elektroanschlüsse vorgesehen ist. Damit ist es möglich, annähernd in Axialrichtung mit dem Rahmen des Schleppers in den Rahmen der Arbeitsmaschine einzufahren, wobei sowohl durch die stehenden Flansche als auch durch den versetzten Steg eine Zentrierung der beiden Rahmen erfolgt. Der zum Anschlußrahmen hin versetzte Steg zur Lagerung der Antriebswellenklauenkupplung ermöglicht außerdem eine längere Ausbildung der Zapfwelle. Mit der Klauenkupplung ist ohne weitere Hilfsmaßnahmen beim Einschieben des Kupplungsrahmens an den Anschlußrahmen eine sofortige Kupplung mit der Antriebswelle des Arbeitsgerätes möglich.

Bevorzugterweise ist in an sich bekannter Weise an der oberhalb des Steges vorgesehenen Spitze des Kupplungsrahmens eine drehbare Rolle vorgesehen, deren Achse senkrecht zur Kupplungsrichtung beider Rahmen verläuft. Mit einer derartigen Rolle ist ein wesentlich leichteres Einführen des Kupplungsrahmens in die Spitze des Anschlußrahmens möglich.

Die Verbindung beider Rahmen wird noch zusätzlich dadurch vereinfacht, daß die Flansche des Anschlußrahmens im Bereich der oberen Spitze unter Bildung einer Auflauffläche für die am Kupplungsrahmen befestigte Rolle miteinander verbunden sind. Zur sicheren Verbindung beider Rahmen muß lediglich der Kupplungsrahmen mit der daran befestigten Rolle die Auflauffläche hinterfahren, wobei durch die Rolle ein verrringerter Reibwert vorliegt.

Eine andere vorteilhafte Ausführungsform der Erfindung besteht darin, daß die Auflauffläche in ihrem unteren, freien Endbereich eine in Richtung zum Kupplungsrahmen gerichtete Schrägfläche aufweist. Mit dieser Schrägfläche wird das Einfädeln des Kupplungsrahmens mit der Rolle wesentlich erleichtert, wobei auch geringfügige Verschiebungen beider Rahmen keine Störung der Kupplung verursachen.

Schließlich besteht noch eine weitere vorteilhafte Ausführungsform der Erfindung darin, daß als Kupplung der Antriebswelle eine am Steg des Kupplungsrahmens gelagerte Rutschkupplung mit einer verstellbaren Druckfeder vorgesehen ist, wodurch man bei entsprechendem Einstellen des Federdruckes an der auf der Antriebswelle verschiebbaren Kupplungstrommel die bestmögliche Ausnützung und die größtmögliche Sicherheit des Gerätes erhält.

Im folgenden wird die Erfindung an Hand eines in der Zeichnung dargestellten Ausführungsbeispieles näher beschrieben.

Es zeigen:

Fig. 1 eine Ansicht des frontseitigen Endes eines Schleppers mit angebautem Kupplungsrahmen ( teilweise im Schnitt),

Fig.2 eine Ansicht des Kupplungsrahmens,

Fig.3 einen Schnitt durch den Kupplungsrahmen,

Fig.4 eine Darstellung gemäß Fig.1 jedoch zusätzlich mit dem Anschlußrahmen des Mähwerkes,

Fig.5 eine Ansicht des Anschlußrahmens des Mähwerks und

Fig.6 einen Schnitt durch den Anschlußrahmen in Fig.5,

Fig.7 eine Perspektivansicht der Zugmaschine mit dem Kupplungsrahmen,

Fig.8 eine Vorderansicht des Kupplungsrahmens mit einer Verriegelungsvorrichtung,

Fig.9 eine Seitenansicht des Kupplungsrahmens,

Fig.10 eine Klauenkupplung und

Fig. 11 eine konische Rutschkupplung.

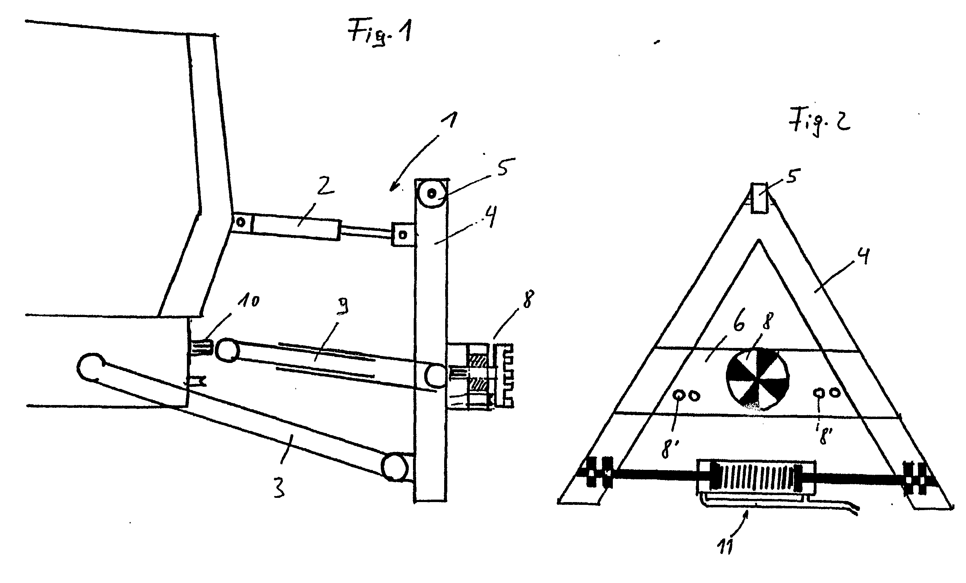

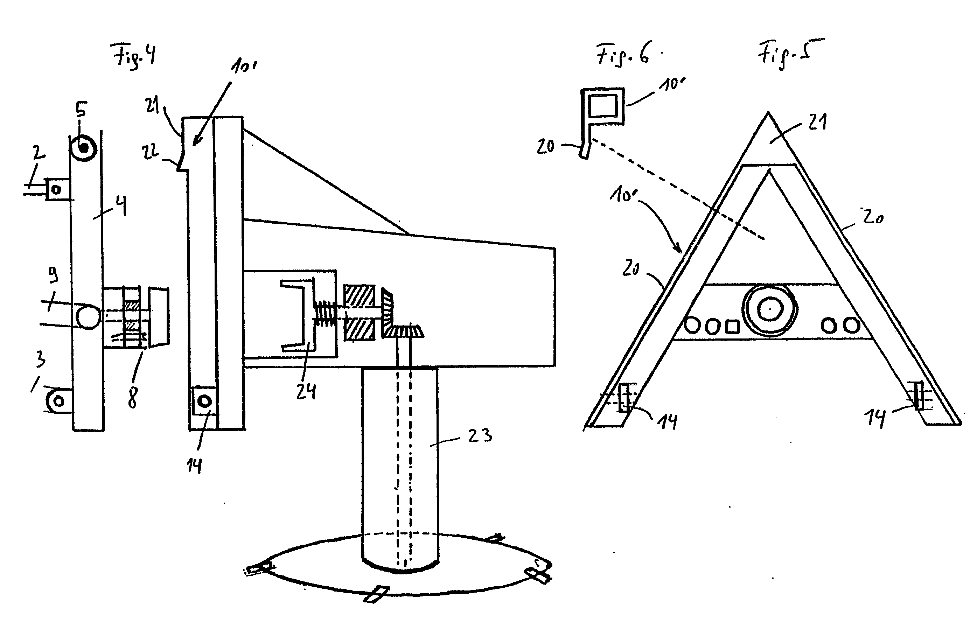

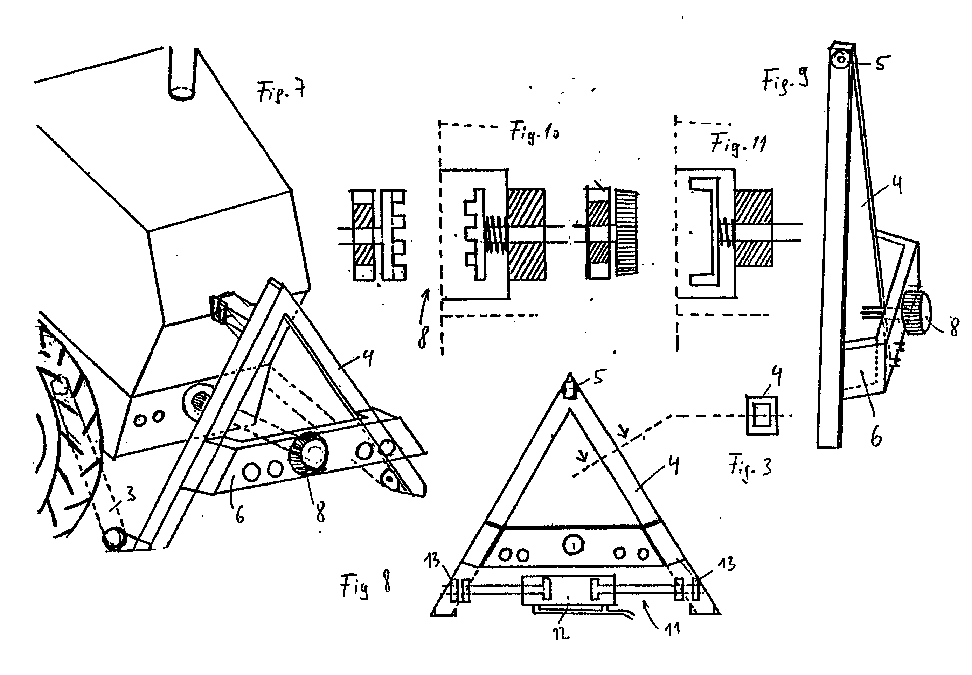

Fig. 1 zeigt die Frontseite eines Schleppers mit der Schlepperhydraulik 1, die aus einem Dreipunkthubwerk zum Ankuppeln von Arbeitsmaschinen besteht. Dieses Dreipunkthubwerk umfaßt einen längenverstellbaren Oberlenker 2 und zwei Unterlenker 3. Diese tragen einen Kupplungsrahmen 4, wobei die Verbindung über Gelenkzapfen erfolgt. Der Kupplungsrahmen 4 ist als gleichseitiges Dreieck ausgebildet, dessen Spitze nach oben gerichtet ist. Der Kupplungsrahmen 4 weist an seiner Spitze eine Rolle 5 auf, die um eine zur Kupplungsrichtung senkrechte Achse drehbar gelagert ist. Im unteren Drittel des Kupplungsrahmens 4 ist ein horizontal verlaufender Steg 6 zur Lagerung einer Antriebswellenklauenkupplung 8 und zur Befestigung von erforderlichen Steckupplungen 8' für Hydraulik, Pneumatik und Elektrik vorgesehen. Die Antriebswellenklauenkupplung 8 wird mit einer längenveränderbaren Gelenkwelle 9 vom Zapfwellenanschluß 10 des Schleppers angetrieben.

Wie in Fig. 3 dargestellt, ist der Kupplungsrahmen 4 im Querschnitt kastenförmig ausgebildet.

Fig. 4 und 5 zeigen den dazugehörigen Anschlußrahmen 10', der auf dem dargestellten Frontmähwerk 23 bleibend angebracht ist. Dieses weist eine Rutschkupplung 24 mit einer druckverstellbaren Feder auf. Der Anschlußrahmen 10' ist gleichfalls als gleichseitiges Dreieck ausgebildet und weist eine im Vergleich zum Kupplungsrahmen 4 gleiche Größe mit kastenförmigem Querschnitt (Fig.6) auf. An beiden Seiten des Anschlußrahmens 10' sind in Richtung des Kupplungsrahmens 4 vorstehende Flansche 20 vorgesehen, die im Bereich der Spitze durch eine Auflauffläche 21 verbunden sind, um dadruch ein Unterfahren und ein Einhaken des Kupplungsrahmens 4 mit dessen Rolle 5 zu ermöglichen.

Die Auflauffläche 21 weist mit ihrem unteren Bereich eine in Richtung zum Kupplungsrahemn 4 geneigte Schrägfläche 22 auf. In gleicher Höhe wie am Kupplungsrahmen 4 ist auch beim Anschlußrahmen 10' eine Lagermöglichkeit für die Anschlüsse von Hydraulik-,Pneumatik- und Elektroanschlüssen vorgesehen.

Das Ankuppeln der Arbeitsmaschine an die Lenker 2,3 der Schlepperhydraulik erfolgt derart, daß der Kupplungsrahmen 4 ganz abgesenkt wird und die Spitze mit der Rolle 5 in die Öffnung des Anschlußrahmens 10' bzw. hinter die Auflauffläche 21 von unten hineingefahren und durch Anheben der Hydraulik und eventuelles Einziehen des Oberlenkers 2 beide Rahmen 4, 10' in die richtige Position gebracht und in dieser Lage verriegelt wird. Auf diese Weise ist die jeweilige Arbeitsmaschine ohne Zutun der auf dem Schlepper sitzenden Bedienungsperson gekuppelt.

Die Verriegelungsvorrichtung 11 besteht aus einem am Kupplungsrahmen 4 befestigten doppelt wirkenden Arbeitszylinder 12, inbesondere Hydraulikzylinder, mit zwei Kolbenstangen, deren freie Enden in Führungen 13 an den unteren Enden der Dreieckseiten des Kupplungsrahmens 4 geführt sind. In gleicher Weise sind auch am Anschlußrahmen 10' Vorsprünge 14 vorgesehen, die in die Führungen 13 einbringbar und von den Kolbenstangen durchsetzbar sind. Im Hydraulikzylinder 12 ist eine Druckfeder eingebaut, deren Aufgabe die Haltung der Kolbenstangen in der Verriegelungsstellung ist. Zum Entriegeln werden jeweils die beiden Kammern des Arbeitszylinders 12 über eine Druckleitung beaufschlagt, wodurch die Kolbenstangen aus den Führungen soweit herausgezogen werden, daß die Vorsprünge in die Führung einbringbar sind bzw. aus diesen herausgezogen werden können. Bei Verwendung der erfindungsgemäßen Verriegelungsvorrichtung 11 kann frontseitig das Mähwerk bzw. der Schwader und heckseitig der Ladewagen angebracht werden, da man das jeweilige Arbeitsgerät sehr rasch an-bzw. abkuppeln kann, ohne dass dabei die Bedienungsperson vom Schlepper ab -steigen muß.

## Patentansprüche

1. Schnellkupplung zum gleichzeitigen Anschluß landwirtschaftlicher Arbeitsmaschinen an die Lenker (2, 3) der Schlepperhydraulik und den Zapfwellenanschluß (10) des Schleppers, bestehend aus einem ständig mit den Lenkern der Schlepperhydraulik verbundenen Kupplungsrahmen (4) und einem bleibend an der Arbeitsmaschine angeordneten Anschlußrahmen (10') aus einem über eine insbesonders längenverstellbare Gelenkwelle (9) mit dem Zapfwellenanschluß des Schleppers verbundenen Antriebswellenstumpf (8) mit Kupplung, die in einem in Richtung zum Anschlußrahmen hin versetzten horizontalen Steg (6) des Kupplungsrahmens gelagert ist und aus einer Verriegelungsvorrichtung (11) zur gegenseitigen Verriegelung von Kupplungsrahmen und Anschlußrahmen, wobei der mit der Schlepperhydraulik ständigt verbundene Kupplungsrahmen annähernd dreieckförmig ausgebildet ist, wobei der an der Arbeitsmaschine angeordnete Anschlußrahmen als annähernd dreieckförmiger Gegenrahmen ausgebildet ist, und die Spitze (5) des dreieckförmigen Kupplungsrahmens und die Spitze (21) des dreieckförmigen Anschlußrahmens nach oben gerichtet sind, dadurch gekennzeichnet, daß der insbesondere kastenförmigen Querschnitt aufweisende Anschlußrahmen (10') nur an zwei von den Spitzen ausgehenden Dreieckseiten in Richtung auf den Schlepper hin vorstehende Vorsprünge und/oder Flanschen (20) aufweist, die im gekuppelten Zustand des Kupplungsrahmens (4) mit dem Anschlußrahmen (10') die Seitenflächen des Kupplungsrahmens (4) übergreifen und daß der Steg (6) auch zur Lagerung der Steckkupplungen (8') für die Hydraulik-, Pneumatik- und Elektroanschlüsse vorgesehen ist.

2. Schnellkupplung nach Anspruch 1, dadurch gekennzeichnet, daß an der oberhalb des Steges (6) vorgesehenen Spitze des Kupplungsrahmens (4) eine drehbare Rolle (5) vorgesehen ist, deren Achse parallel zur Ebene des Kupplungsrahmens (4) verläuft.

3. Schnellkupplung nach Anspruch 1 oder 2, dadurch gekennzeichnet, daß als Kupplung der Antriebswelle (3) eine am Steg (6) des Kupplungsrahmens (4) gelagerte Rutschkupplung (24) mit einem verstellbaren Federdruck vorgesehen ist..

## Claims

1. Quick-acting coupling for the simultaneous connection of agricultural appliances to the links (2, 3) of the tractor hydraulics and to the power take-off connection (10) of the tractor, consisting of a coupling frame (4) constantly connected to the links of the tractor hydraulics and of a connecting frame (10') permanently arranged on the appliance and composed of a drive-shaft butt (8) connected to the power take-off connection of the tractor via an especially longitudinally adjustable cardan shaft (9) and having a coupling mounted in a horizontal web (6) of the coupling frame offset in the direction of the connecting frame, and of a locking device (11) for the interlocking of the coupling frame and connecting frame, the coupling frame constantly connected to the tractor hydraulics being made approximately triangular, the connecting frame arranged on the appliance being designed as an approximately triangular counterframe, and the vertex (5) of the triangular coupling frame and the vertex (21) of the triangular connecting frame being directed upwards, characterized in that the connecting frame (10') having an especially box-shaped cross-section possesses projections and/or flanges (20) which project in the direction of the tractor on only two triangle sides extending from the vertices and which, when the coupling frame (4) is in the state coupled to the connecting frame (10'), engage over the side faces of the coupling frame (4), and in that the web (6) is also provided for mounting the plug couplings (8') for the hydraulic, pneumatic and electrical connections.

2. Quick-acting coupling according to Claim 1, characterized in that at the vertex of the coupling frame (4) located above the web (6) there is a rotatable roller (5) of which the axis extends parallel to the plane of the coupling frame (4).

3. Quick-acting coupling according to Claim 1 or 2, characterized in that as a coupling of the drive shaft (3) there is a slip coupling (24) mounted on the web (6) of the coupling frame (4) and having an adjustable spring pressure.

## Revendications

1. Attelage rapide pour raccorder simultanément des machines agricoles aux bras oscillants (2, 3) du relevage hydraulique et au branchement de prise de force d'un tracteur (10), se composant, d'une part, d'un cadre d'accouplement (4) relié de façon permanente aux bras oscillants du relevage hydraulique du tracteur et d'un cadre de raccord (10') monté à demeure sur la machine agricole à accoupler et, d'autre part, d'un bout d'arbre primaire (8) qui est solidaire du branchement de prise de force du tracteur, au moyen d'un arbre articulé (9) mobile en particulier dans le sens axial et qui est muni d'un accouplement supporté à rotation par une traverse (6) du cadre d'accouplement qui peut être déplacée horizontalement, en direction du cadre d'accouplement; et également d'un dispositif de verrouillage (11) pour verrouiller ensemble le cadre d'accouplement et le cadre de raccord, le cadre d'accouplement, relié à demeure au relevage hydraulique présentant une forme sensiblement triangulaire, tandis que le cadre de raccordement disposé sur la machine agricole présente la forme d'un contre-cadre également sensiblement triangulaire, et que la pointe (5) du cadre d'accouplement triangulaire et la pointe (21) du cadre de raccordement triangulaire sont dirigées vers le haut, caractérisé en ce que le cadre de raccordement (10'), en particulier à section en caisson, présente, des parties en saillies et/ou formant brides (20), dirigées vers le tracteur uniquement sur les deux des côtés du triangle partant de la pointe, ces parties en saillie se mettant en prise avec les surfaces latérales du cadre d'accouplement (4) quand celui-ci est en position d'accouplement avec son homologue, le cadre de raccordement (10') et en ce que la traverse (6) sert également d'assise aux accouplements à enfichage (8') pour les raccords hydrauliques, pneumatiques et électriques.

2. Attelage rapide selon la revendication 1, caractérisé en ce qu'il comporte, à la pointe du cadre d'accouplement (4) au-dessus de la traverse (6), un rouleau rotatif (5) dont l'axe est parallèle au plan du cadre d'accouplement (4).

3. Attelage rapide selon la revendication 1 ou 2, caractérisé en ce que l'on utilise l'accouplement de l'arbre d'entraînement un accouplement à glissement (24), dont la pression de ressort est ajustable et qui est monté sur la traverse (6) du cadre d'accouplement (4).

Fig. 1

Fig. 2

Fig. 4

Fig. 6          Fig. 5

5

2

21

10'

22

4

9

8

14

24

23

10''

20

21

20

10''

20

14

14

EP 0 197 026 B1

EP 0 197 026 B1

Fig. 3

Fig. 7

Fig. 10

Fig. 11

Fig. 3

Fig. 8